# EUROPEAN PATENT SPECIFICATION

(11) **EP 1 884 004 B1**
(45) Date of publication and mention of the grant of the patent: **20.04.2016**
(21) Application number: 06745333.2
(22) Date of filing: 09.05.2006
(51) Int. Cl.: H02G 3/12, H02G 3/18

(54) **EMBEDDED ELECTRICAL SWITCHBOARD**
EINGEBETTETE ELEKTRISCHE SCHALTTAFEL
PANNEAU DE COMMANDE ELECTRIQUE IMBRIQUE

(30) Priority: 17.05.2005 IT MI20050903
(43) Date of publication of application: 06.02.2008
(73) Proprietor: BTICINO S.P.A., Viale Borri, 231 21100 Varese (IT)
(72) Inventor: PASSERA, Costantino, I-20094 Corsico (IT); ZENI, Mauro, I-21013 Gallarate (IT)
(74) Representative: Long, Giorgio
(86) International application number: PCT/IT2006/000329
(87) International publication number: WO 2006/123386

(56) References cited:
- DE-A1- 4 234 802
- DE-A1- 19 639 521
- DE-U1- 20 205 356
- FR-A1- 2 132 273
- GB-A- 1 339 480

## Description

The object of the present invention is an embedded electrical switchboard.

Embedded electrical switchboards are known to comprise an embedded box intended to be housed in a cavity of a wall. In the embedded box there inserted at least one support case for electrical devices, which is conventionally fixed to the embedded box. On completion of the electrical switchboard, a finishing frame is mounted to the support case.

Known electrical switchboards have some problems, particularly during the installation step, due to the fact that the embedded box can be embedded at different depths and often the depth of the cavity is greater than the depth of the embedded box, thus resulting in the box being excessively embedded in the cavity. This situation generally occurs due to the imprecise construction of the cavity or for example when the surface surrounding the cavity is covered by a layer of tiles that is applied subsequently to the construction of the cavity. In addition to the above, it should be noted that the inherent imprecise construction of the cavity is a source of wrong alignments inside the embedded box, with the consequence that not only the embedded box is not flush with the wall, but also it may not be evenly embedded within the cavity.

The subsequent fixing of the support case to the embedded box is thus particularly delicate. In fact, also when the support case is fixed to the embedded box, its position has to be defined regardless of the position of the embedded box, such as to allow the finishing frame to be subsequently placed on the support case flush with the surface surrounding the cavity of the wall.

In view of the above, a need emerges, which is particularly felt in the field, for the support case to be more easily placed and fixed on the embedded box, while limiting as much as possible the need of resorting to an installer's skill in balancing excessive embedding or wrong alignments of the embedded box.

The means currently available for fixing the support case to the embedded box not only cannot facilitate the installer work of defining the proper location of the support case, but they are also a source of further inconveniences, since they are difficult to access or such as to generate warps or deformations of the case. These drawbacks are particularly felt with electrical switchboards having a large size and a considerable weight, the installation of which is further complicated.

DE19639521 **describes an electrical switchboard which forms a closest state of the art for the present invention.**

The problem at the heart of the present invention is to provide an embedded electrical switchboard having such structural and functional characteristics as to meet said requirement, while overcoming the drawbacks mentioned with reference to the prior art.

Particularly, the problem at the heart of the present invention is to provide an electrical switchboard that can be easily installed, avoiding warps or deformations of the support case and preferably such that its position can be set regardless of the position of the embedded box within the respective cavity.

This problem is solved by means of an embedded electrical switchboard in accordance with claim 1.

Further characteristics and advantages of the embedded electrical switchboard according to the invention will be understood from the description given below of a preferred exemplary embodiment thereof, which is given as non-limiting indication, with reference to the attached figures, in which:
Fig. 1 illustrates a perspective exploded view of a detail of several components of an embedded electrical switchboard according to the present invention;
Fig. 2 illustrates a perspective view of the detail from Fig. 1 when assembled;
Fig. 3 illustrates a section of a detail from Fig. 2;
Fig. 4 illustrates a perspective view of a detail of several components of a possible embodiment of an electrical switchboard according to the present invention.

With reference to said figures, with 10 has been generally designated an embedded box of an embedded electrical switchboard, which is suitable to be housed in a cavity 12 of a wall 14. In accordance with the embodiment illustrated in the attached examples, the embedded box 10 comprises a quadrangular bottom 10a, side walls 10b extending perpendicular therefrom, which end by bending to form an outer frame 16.

The electrical switchboard further comprises at least one support case 18 for electrical devices which is suitable to be fixed to the embedded box 10. In accordance with the embodiment as illustrated in the annexed examples, the support case comprises a substantially plane middle portion 20 and side portions 22 bending therefrom.

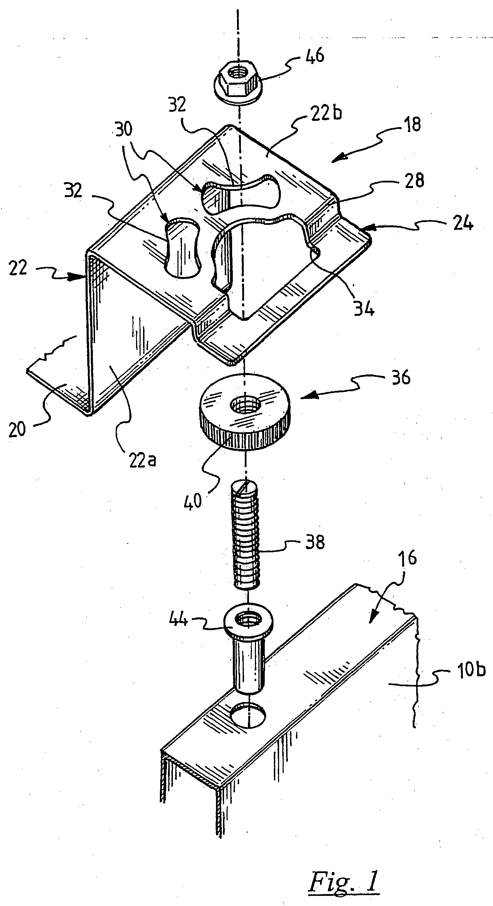

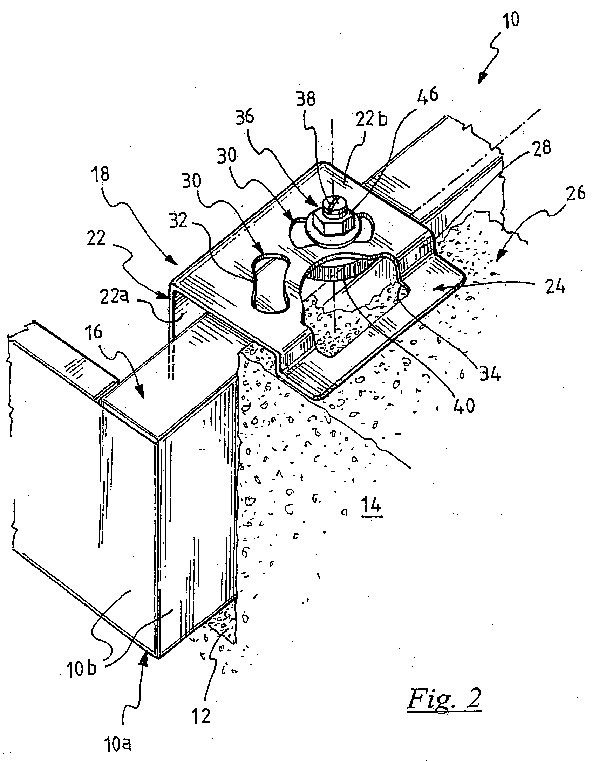

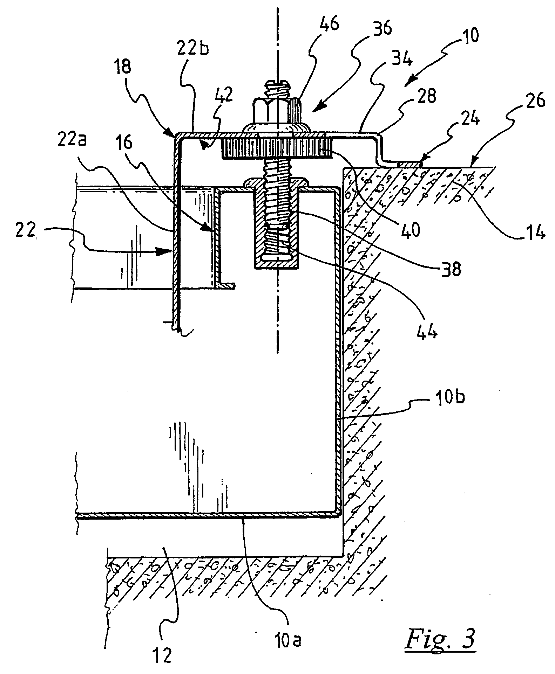

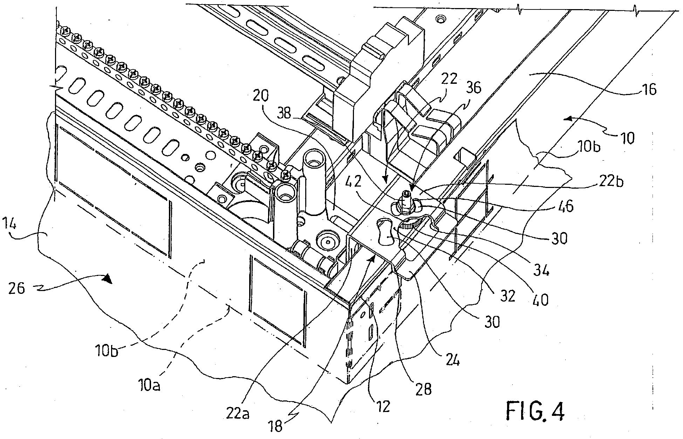

Fig. 1-3 illustrate a detail of the embedded box 10 and support case 18 corresponding to a tract of the middle portion 20 and one of the side portions 22 of the support frame. The side not illustrated may have a structure substantially symmetrical to the one illustrated. Fig. 4 illustrates a detail of an electrical switchboard according to an embodiment of the present invention.

The middle portion 20 is suitable to be arranged within the embedded box, thereby defining a gap with the bottom 10a of the embedded box. Furthermore, the middle portion 20 extends between two opposite side walls of the embedded box 10 which are overlapped by the side portions 22.

In accordance with a possible embodiment, the support case comprises at least one square end. In the example illustrated herein, the side portions 22 define respective square ends of the support case. In other words, when the support case 18 is fixed to the embedded box 10 at opposite ends, a square end may be provided for each end of the support case 18 that is connected to the embedded box 10.

A square end has a first tract 22a suitable to be arranged substantially parallel to the respective side wall 10b of the embedded box, and a second tract 22b suitable to be arranged substantially parallel to the bottom 10a or outer frame 16 of the embedded box.

Advantageously, from the support case 18 there extends, past the bulk of the embedded box 10, a resting portion 24 suitable to rest against an outer surface 26 of the wall 14 housing the embedded box. In the example as illustrated in the figures, in which the support case 18 comprises at least one square end, the resting portion 24 extends from this square end, thereby forming an extension thereof. Advantageously, the resting portion 24 extends from the square end by means of a bent joint 28 such that the second tract 22b of the square end is arranged at a determined distance from the outer surface 26 of the wall 14 that houses the embedded box 10. Preferably, the support case 18 is fixed to the embedded box 10 at opposite ends and a resting portion 24 can be advantageously provided for each end of the support case 18 that is connected to the embedded box 10. Particularly, a resting portion 24 extends from each side portion 22 of the support case 18.

In accordance with a possible embodiment, the support case 18 has at least one slot 30 for example being formed at the side portion 22 overlapping the side wall 10b of the embedded box 10. Particularly, the slot 30 is arranged at the outer frame 16 of the embedded box, or in other words, it is formed in the second tract 22b of the square end of the support case. Advantageously, the slot has a lobed shape with a central narrowing 32.

In accordance with a possible embodiment, the support case 18 is fixed to the embedded box 10 at opposite ends and at least one slot 30 can be advantageously provided for each end of the support case 18 that is connected to the embedded box 10. Particularly, the support case 18 is symmetrical and each side portion 22 comprises at least one slot 30. Referring particularly to the example as illustrated in the annexed figures, each side portion 22 of the support case 18 comprises two slots 30.

In accordance with a possible embodiment, the support case 18 has at least one opening 34 that is arranged, for example, at the side portion 22. Particularly, the square end has such opening 34, for example, at the bent joint 28, when provided, or between the second tract 22b of the square end and the resting portion 24. When the support case 18 is fixed to the embedded box 10 at opposite ends, at least one opening 34 may be advantageously provided for each end of the support case 18 that is connected to the embedded box 10. Also in this case, the support case 18 can be symmetrical and at least one opening 34 is provided for each side portion 22.

The support case 18 is suitable to be fixed to the embedded box 10 by means of fixing means being generally designated with numeral 36. In the figure, there are illustrated the fixing means relative to a side portion 22 of the support case 18. The fixing means as will be subsequently described may be provided at each side portion 22 of the support case 18. In other words, the support case 18 is advantageously fixed to the embedded box 10 at opposite ends, which correspond to the respective side portions 22, and each of them can be provided with relative fixing means.

Advantageously, the fixing means 36 comprise a connecting element 38 that is arranged between the embedded box 10 and the support case 18, at at least one side portion 22 of the case and a side wall 10b of the embedded box 10, thereby the fixing means 36 can be directly accessed from the outside.

The fixing means 36 further comprise a stop 40 movable along the connecting element to abut against an abutment surface 42 of the support case 18 facing the embedded box 10. Considering the support case 18 as being fixed to the embedded box 10 at opposite ends, corresponding to the respective side portions 22, fixing means can be provided which comprise a connecting element 38 and an abutment 40 for each end of the support case 18 being connected to the embedded box 10.

Preferably, the fixing means 36 are arranged at the outer frame 16 of the embedded box 10. In this case, as illustrated in the figures, the connecting element 38 can be provided by means of a threaded pin extending from the outer frame 16 of the embedded box 10. Furthermore, the stop 40 can be provided by means of a ring-nut coupled to the threaded pin and movable relative thereto following an operation of screwing or unscrewing the ring-nut on the threaded pin.

To gain access to the stop 40 and allow the same to move along the connecting element, the opening 34 of the support case 18 (particularly, of the square end) can be advantageously provided.

Preferably, the threaded pin is screwed on the embedded box 10, particularly on the outer frame 16, for example by providing a threaded insert 44 being mounted to the outer frame 16 of the embedded box 10 to receive the threaded pin. The locking of the threaded insert 44 on the embedded box 10 can be carried out for example by means of riveting.

In accordance to what has been described above for the support case 18, the side portion 22 of the support case 18 (and particularly, the inner surface of the second tract 22b in the case of a square end) is suitable to define the abutment surface 42 of the support case 18 against which the stop 40 is abutted. It should be noted that by the term "inner surface" is meant the surface of the second tract 22b facing the embedded box 10.

In the embodiment as described above, in which a side portion 22 of the support case 18 comprises at least one slot 30, the slot 30 is suitable to be passed through by the connecting element 38. Particularly, the lobed shape is suitable for centering the connecting element 38 relative to the slot 30.

Advantageously, the fixing means further comprise a nut 46 that is screwed on the threaded pin on the opposite side of the support case 18 relative to the stop 40.

The assembly of the above-described components of the embedded electrical switchboard according to the present invention, and particularly the operation of the fixing means is described below with reference to the examples illustrated.

After the cavity 12 has been formed in the wall 14, the embedded box 10 is inserted therein. Generally, the depth of the cavity 12 is just greater than the depth of the embedded box 10, particularly when a layer of tiles has been applied about the cavity 12. The embedded box 10, and particularly the outer frame 16, are thus just embedded in the cavity 12.

The embedded box, and particularly the outer frame 16, is provided with threaded pins (connecting elements 38), such as screwed within respective threaded inserts 44, which are arranged at opposite ends of the support case 18. On each threaded pin there is screwed a ring-nut (stop 40).

The support case 18 is then introduced within the embedded box 10, by inserting the threaded pins extending from the embedded box 10 within respective slots 30 of the support case 18. With the provision of the resting portion 24, the support case 18 rests on the outer surface 26 surrounding the cavity 12, thus defining the position of the support case 18 regardless of the position of the embedded box 10 within the cavity 12.

In order to fix the support case 18 to the embedded box 10, the ring-nut is unscrewed on the threaded pin such as to be moved away from the embedded box (outer frame 16) and be abutted against the abutment surface 42 of the support case 18 that faces the embedded box 10, for example the inner surface of the second tract 22b of the square end. Finally, the nut 46 is locked to the threaded pin on the opposite side of the ring-nut relative to the support case 18. When the installation of the electrical switchboard has been completed, a finishing frame, not illustrated, is fixed on the support case 18.

From what has been stated above, it may be appreciated how the provision of an electrical switchboard according to the present invention allows meeting said requirement of simplifying the step of assembling the support case to the embedded box, while obtaining a valuable final aesthetic value. An advantage of the present invention is the position of the fixing means, which can be thus easily accessed and manoeuvred, and the shape thereof which allows avoiding structural deformations of the support case.

In fact, due to the provision of a movable stop, an inner stop can be obtained which prevents the support case from being damaged. Furthermore, along with the provision of the outer nut, the movable stop defines a bilateral fastening of the support case which contributes to stabilize the latter. The advantages set forth above are even more apparent with support cases having a large size and hence a considerable weight.

Furthermore, synergic effects are noticed when the fixing means according to the present invention are coupled to at least one resting portion suitable to abut on the outer wall surrounding the housing cavity of the embedded box. In fact, the position of the support frame is automatically defined, regardless of the position of the embedded box, since the support case rests on the outer wall surrounding the cavity and is maintained precisely and without deformations by positioning the movable stop in abutment.

It should be understood that variations and/or additions may be provided to what has been described and illustrated above.

Alternatively to what has been represented in the annexed figures, the stop may be provided movable along the connecting element in a different manner. For example, a sliding stop can be provided on the connecting element, and being fixable either continuously or in one or more discrete positions along the connecting element.

According to a possible variant embodiment, the ring-nut may be provided in a different manner, such as by replacing the outer surface, which is preferably knurled and suitable to be actuated by hand, by means of a surface suitable to cooperate with an adjusting tool.

The connecting element may be provided as being other than a threaded pin, for example in association with a movable stop in a different manner thereon. In addition, the connecting element may be fixed to the embedded box in a different manner, for example by providing a screw being either inserted from the inside of the outer frame or stably associated thereto.

The accessibility to the stop may also be obtained by arranging the connecting element at one side of the side portion, or by means of solutions other than the provision of the opening 34.

Alternatively to what has been illustrated in the annexed figures, the connecting element may not be passed through the support case, for example by being arranged laterally thereto and by providing a stop and a nut having such a size, however, as to abut against the abutment surface 42 and an outer surface of the support case, respectively.

In accordance with a possible embodiment, the connecting element 38 is a threaded pin generally extending from the embedded box 10. For example, the stop 40 is also a ring-nut, as described above. In this case, the fixing means 36 may comprise a threaded insert 44 that is generally mounted to the embedded box 10. Similarly to what has been described above, the nut 46 may be screwed on the threaded pin on the opposite side of the support case 18 relative to the stop 40.

To the preferred embodiment of the electrical switchboard such as described above, those skilled in the art, aiming at satisfying contingent and specific requirements, may carry out a number of modifications, adaptations and replacements of elements with functionally equivalent ones, without however departing form the scope of the claims below.

## Claims

1. An embedded electrical switchboard comprising an embedded box (10) suitable to be housed in a cavity (12) of a wall (14), at least one support case (18) for electrical devices suitable to be fixed to the embedded box (10) and means (36) for fixing the support case (18) to the embedded box (10), wherein said fixing means (36) comprise at least one connecting element (38) arranged between the embedded box (10) and the support case (18) at at least one side portion (22) of the case and a side wall (10b) of the embedded box (10), said fixing means (36) being directly accessible from the outside,
wherein said support case (18) has at least one slot (30) suitable to be passed through by at least said connecting element (38), **characterized in that** said slot (30) has a lobed shape with a central narrowing (32) for centering the connecting element (38).

2. The embedded electrical switchboard according to claim 1, wherein said support case (18) is fixed to the embedded box (10) at opposite ends and wherein the fixing means (36) are provided, which comprise at least one connecting element (38) for each end of the support case (18) that is connected to the embedded box (10).

3. The embedded electrical switchboard according to claim 1 or 2, wherein said fixing means (36) are arranged at an outer frame (16) of the embedded box (10).

4. The embedded electrical switchboard according to claim 3, wherein said connecting element (38) is a threaded pin extending from the outer frame (16) of the embedded box (10).

5. The embedded electrical switchboard according to claim 4, wherein said fixing means (36) comprise a threaded pin (44) being mounted to the outer frame (16) of the embedded box (10) to receive said threaded pin.

6. The embedded electrical switchboard according to claim 4 or 5, wherein said fixing means (36) comprise a nut (46) that is screwed on the threaded pin.

7. The embedded electrical switchboard according to one of the preceding claims, wherein said fixing means comprise at least one movable stop (40) along said connecting element (38) to abut against an abutment surface (42) of the support case (18) that faces the embedded box (10).

8. The embedded electrical switchboard according to claim 7, wherein said connecting element (38) is a threaded pin extending from the outer surface (16) of the embedded box (10) and wherein said stop (40) is a ring-nut being coupled to the threaded pin and movable relative thereto following an operation of screwing or unscrewing the ring-nut on the threaded pin.

9. The embedded electrical switchboard according to claim 7 or 8, wherein said support case (18) has at least one opening (34) for gaining access to the stop (40) and allowing the same to move along the connecting element (38).

10. The embedded electrical switchboard according to claim 9, wherein said support case (18) is fixed to the embedded box (10) at opposite ends and wherein at least one opening (34) is provided for each end of the support case (18) that is connected to the embedded box (10).

11. The embedded electrical switchboard according to one of claims 7 to 10, wherein said support case (18) comprises at least one square end suitable to define the abutment surface (42) of the support case (18) against which said stop (40) is abutted.

12. The embedded electrical switchboard according to claim 9 or 11, wherein said square end has said opening (34) for gaining access to the stop (40) and allowing the same to move along the connecting element (38).

13. The embedded electrical switchboard according to claim 11 or 12, wherein said support case (18) is fixed to the embedded box (10) at opposite ends and wherein at least one square end is provided for each end of the support case (18) that is connected to the embedded box (10).

14. The embedded electrical switchboard according to one of the preceding claims, wherein a resting portion (24) extends from the support case (18) past the bulk of the embedded box (10) and is suitable to rest against an outer surface (26) of the wall (14) housing the embedded box (10).

15. The embedded electrical switchboard according to claim 14, wherein the resting portion (24) extends from a square end of the support case (18) by means of a bent joint (28) such that a second tract (22b) of the square end is arranged at a determined distance from the outer surface (26) of the wall (14) housing the embedded box (10).

16. The embedded electrical switchboard according to claim 14 or 15, wherein said support case (18) is fixed to the embedded box (10) at opposite ends and wherein at least one resting portion (24) is provided for each end of the support case (18) that is connected to the embedded box (10).

17. The embedded electrical switchboard according to claim 1, wherein said support case (18) is fixed to the embedded box (10) at opposite ends and wherein at least one slot (30) is provided for each end of the support case (18) that is connected to the embedded box (10).

18. The embedded electrical switchboard according to claim 1 or 2, wherein said connecting element (38) is a threaded pin extending from the embedded box (10).

19. The embedded electrical switchboard according to claim 18, wherein said fixing means (36) comprise a threaded pin (44) mounted to the embedded box (10) to receive said threaded pin.

20. The embedded electrical switchboard according to claim 18 or 19, wherein said fixing means (36) comprise a nut (46) that is screwed on the threaded pin.

## Patentansprüche

1. Eingebettete elektrische Schalttafel, umfassend eine eingebettete Box (10), welche dazu geeignet ist, in einem Hohlraum (12) einer Wand (14) aufgenommen zu sein, wenigstens ein Stützgehäuse (18) für elektrische Vorrichtungen, welches dazu geeignet ist, an der eingebetteten Box (10) befestigt zu sein, und Mittel (36) zum Befestigen des Stützgehäuses (18) an der eingebetteten Box (10), wobei die Befestigungsmittel (36) wenigstens ein Verbindungselement (38) umfassen, welches zwischen der eingebetteten Box (10) und dem Stützgehäuse (18) an wenigstens einem Seitenabschnitt (22) des Gehäuses und einer Seitenwand (10b) der eingebetteten Box (10) angeordnet ist, wobei die Befestigungsmittel (36) direkt von der Außenseite zugänglich sind,
wobei das Stützgehäuse (18) wenigstens eine Aussparung (30) aufweist, welche dazu geeignet ist, von wenigstens dem Verbindungselement (38) durchquert zu werden, **dadurch gekennzeichnet, dass** die Aussparung (30) zum Zentrieren des Verbindungselements (38) eine gewölbte Form mit einer zentralen Verengung (32) aufweist.

2. Eingebettete elektrische Schalttafel nach Anspruch 1, wobei das Stützgehäuse (18) an der eingebetteten Box (10) an entgegengesetzten Enden befestigt ist und wobei die Befestigungsmittel (36) bereitgestellt sind, welche wenigstens ein Verbindungselement (38) für jedes Ende des Stützgehäuses (18), welches mit der eingebetteten Box (10) verbunden ist, umfassen.

3. Eingebettete elektrische Schalttafel nach Anspruch 1 oder 2, wobei die Befestigungsmittel (36) an einem äußeren Rahmen (16) der eingebetteten Box (10) angeordnet sind.

4. Eingebettete elektrische Schalttafel nach Anspruch 3, wobei das Verbindungselement (38) ein Gewindestift ist, welcher sich von dem äußeren Rahmen (16) der eingebetteten Box (10) erstreckt.

5. Eingebettete elektrische Schalttafel nach Anspruch 4, wobei die Befestigungsmittel (36) einen Gewindestift (44) umfassen, welcher an den äußeren Rahmen (16) der eingebetteten Box (10) montiert ist, um den Gewindestift aufzunehmen.

6. Eingebettete elektrische Schalttafel nach Anspruch 4 oder 5, wobei die Befestigungsmittel (36) eine Mutter (46) umfassen, welche auf den Gewindestift aufgeschraubt ist.

7. Eingebettete elektrische Schalttafel nach einem der vorhergehenden Ansprüche, wobei die Befestigungsmittel entlang des Verbindungselements (38) wenigstens einen beweglichen Anschlag (40) umfassen, um gegen eine Anschlagfläche (42) des Stützgehäuses (18) anzustoßen, welche der eingebetteten Box (10) zugewandt ist.

8. Eingebettete elektrische Schalttafel nach Anspruch 7, wobei das Verbindungselement (38) ein Gewindestift ist, welcher sich von der äußeren Fläche (16) der eingebetteten Box (10) erstreckt, und wobei der Anschlag (40) eine Ringmutter ist, welche an den Gewindestift gekoppelt und relativ dazu einer Auf- oder Abschraubbetätigung der Ringmutter auf dem Gewindestift folgend beweglich ist.

9. Eingebettete elektrische Schalttafel nach Anspruch 7 oder 8, wobei das Stützgehäuse (18) wenigstens eine Öffnung (34) aufweist, um Zugang zu dem Anschlag (40) zu erlangen und um dem selben zu ermöglichen, sich entlang des Verbindungselements (38) zu bewegen.

10. Eingebettete elektrische Schalttafel nach Anspruch 9, wobei das Stützgehäuse (18) an entgegengesetzten Enden an der eingebetteten Box (10) befestigt ist und wobei wenigstens eine Öffnung (34) für jedes Ende des Stützgehäuses (18), welches mit der eingebetteten Box (10) verbunden ist, bereitgestellt ist.

11. Eingebettete elektrische Schalttafel nach einem der Ansprüche 7 bis 10, wobei das Stützgehäuse (18) wenigstens ein rechteckiges Ende umfasst, welches dazu geeignet ist, die Anschlagfläche (42) des Stützgehäuses (18) zu definieren, gegen welche der Anschlag (40) anstößt.

12. Eingebettete elektrische Schalttafel nach Anspruch 9 oder 11, wobei das rechteckige Ende die Öffnung (34) aufweist, um Zugang zu dem Anschlag (40) zu erlangen und um dem selben zu ermöglichen, sich entlang des Verbindungselements (38) zu bewegen.

13. Eingebettete elektrische Schalttafel nach Anspruch 11 oder 12, wobei das Stützgehäuse (18) an entgegengesetzten Enden an der eingebetteten Box (10) befestigt ist und wobei wenigstens ein rechteckiges Ende für jedes Ende des Stützgehäuses (18), welches mit der eingebetteten Box (10) verbunden ist, bereitgestellt ist.

14. Eingebettete elektrische Schalttafel nach einem der vorhergehenden Ansprüche, wobei sich ein Anlageabschnitt (24) von dem Stützgehäuse (18) hinter den Großteil der eingebetteten Box (10) erstreckt und dazu geeignet ist, an einer äußeren Fläche (26) der Wand (14), welche die eingebettete Box (10) aufnimmt, anzuliegen.

15. Eingebettete elektrische Schalttafel nach Anspruch 14, wobei sich der Anlageabschnitt (24) mittels einer gebogenen Verbindungstelle (28) von einem rechteckigen Ende des Stützgehäuses (18) erstreckt, so dass ein zweiter Teil (22b) des rechteckigen Endes in einer bestimmten Entfernung von der äußeren Fläche (26) der Wand (14), welche die eingebettete Box (10) aufnimmt, angeordnet ist.

16. Eingebettete elektrische Schalttafel nach Anspruch 14 oder 15, wobei das Stützgehäuse (18) an entgegengesetzten Enden an der eingebetteten Box (10) befestigt ist und wobei wenigstens ein Anlageabschnitt (24) für jedes Ende des Stützgehäuses (18), welches mit der eingebetteten Box (10) verbunden ist, bereitgestellt ist.

17. Eingebettete elektrische Schalttafel nach Anspruch 1, wobei das Stützgehäuse (18) an entgegengesetzten Enden an der eingebetteten Box (10) befestigt ist und wobei wenigstens eine Aussparung (30) für jedes Ende des Stützgehäuses (18), welches mit der eingebetteten Box (10) verbunden ist, bereitgestellt ist.

18. Eingebettete elektrische Schalttafel nach Anspruch 1 oder 2, wobei das Verbindungselement (38) ein Gewindestift ist, welcher sich von der eingebetteten Box (10) erstreckt.

19. Eingebettete elektrische Schalttafel nach Anspruch 18, wobei die Befestigungsmittel (36) einen Gewindestift (44) umfassen, welcher an die eingebettete Box (10) montiert ist, um den Gewindestift aufzunehmen.

20. Eingebettete elektrische Schalttafel nach Anspruch 18 oder 19, wobei die Befestigungsmittel (36) eine Mutter (46) umfassen, welche auf den Gewindestift aufgeschraubt ist.

## Revendications

1. Tableau de distribution électrique encastrable comprenant un boîtier encastrable (10) pouvant être logé dans une cavité (12) d'un mur (14), au moins un boîtier de support (18) pour des appareils électriques pouvant être fixés au boîtier encastrable (10) et des moyens (36) pour fixer le boîtier de support (18) au boîtier encastrable (10), dans lequel lesdits moyens de fixation (36) comprennent au moins un élément de connexion (38) disposé entre le boîtier encastrable (10) et le boîtier de support (18) sur au moins une partie latérale (22) du boîtier et une paroi latérale (10b) du boîtier encastrable (10), lesdits moyens de fixation (36) étant directement accessibles par l'extérieur, dans lequel ledit boîtier de support (18) possède au moins une fente (30) pouvant être traversée par au moins ledit élément de connexion (38), **caractérisé en ce que** ladite fente (30) a une forme lobée avec un resserrement central (32) pour le centrage de l'élément de connexion (38).

2. Tableau de distribution électrique encastrable selon la revendication 1, dans lequel ledit boîtier de support (18) est fixé au boîtier encastrable (10) à des extrémités opposées et dans lequel les moyens de fixation (36) sont prévus, comprenant au moins un élément de connexion (38) pour chaque extrémité du boîtier de support (18) qui est connecté au boîtier encastrable (10).

3. Tableau de distribution électrique encastrable selon la revendication 1 ou 2, dans lequel lesdits moyens de fixation (36) sont disposés sur un cadre extérieur (16) du boîtier encastrable (10).

4. Tableau de distribution électrique encastrable selon la revendication 3, dans lequel ledit élément de connexion (38) est une goupille filetée qui s'étend à partir du cadre extérieur (16) du boîtier encastrable (10).

5. Tableau de distribution électrique encastrable selon la revendication 4, dans lequel lesdits moyens de fixation (36) comprennent une goupille filetée (44) montée sur le cadre extérieur (16) du boîtier encastrable (10) pour recevoir ladite goupille filetée.

6. Tableau de distribution électrique encastrable selon la revendication 4 ou 5, dans lequel lesdits moyens de fixation (36) comprennent un écrou (46) qui est vissé sur la goupille filetée.

7. Tableau de distribution électrique encastrable selon l'une des revendications précédentes, dans lequel lesdits moyens de fixation comprennent au moins une butée (40) déplaçable le long dudit élément de connexion (38) de façon à buter contre une surface de butée (42) du boîtier de support (18) qui fait face au boîtier encastrable (10).

8. Tableau de distribution électrique encastrable selon la revendication 7, dans lequel ledit élément de connexion (38) est une goupille filetée qui s'étend à partir de la surface extérieure (16) du boîtier encastrable (10) et dans lequel ladite butée (40) est un écrou annulaire couplé à la goupille filetée et déplaçable par rapport à celle-ci suivant le vissage ou le dévissage de l'écrou annulaire sur la goupille filetée.

9. Tableau de distribution électrique encastrable selon la revendication 7 ou 8, dans lequel ledit boîtier de support (18) possède au moins une ouverture (34) pour accéder à la butée (40) et déplacer celle-ci le long de l'élément de connexion (38).

10. Tableau de distribution électrique encastrable selon la revendication 9, dans lequel ledit boîtier de support (18) est fixé au boîtier encastrable (10) à des extrémités opposées et dans lequel au moins une ouverture (34) est prévue pour chaque extrémité du boîtier de support (18) reliée au boîtier encastrable (10).

11. Tableau de distribution électrique encastrable selon l'une des revendications 7 à 10, dans lequel ledit boîtier de support (18) comprend au moins une extrémité carrée pouvant définir la surface de butée (42) du boîtier de support (18) contre laquelle ladite butée (40) vient buter.

12. Tableau de distribution électrique encastrable selon la revendication 9 ou 11, dans lequel ladite extrémité carrée possède ladite ouverture (34) pour accéder à la butée (40) et déplacer celle-ci le long de l'élément de connexion (38).

13. Tableau de distribution électrique encastrable selon la revendication 11 ou 12, dans lequel ledit boîtier de support (18) est fixé au boîtier encastrable (10) à des extrémités opposées et dans lequel au moins une extrémité carrée est prévue pour chaque extrémité du boîtier de support (18) reliée au boîtier encastrable (10).

14. Tableau de distribution électrique encastrable selon l'une des revendications précédentes, dans lequel une partie d'appui (24) s'étend à partir du boîtier de support (18) au-delà du corps du boîtier encastrable (10) et peut s'appuyer contre une surface extérieure (26) du mur (14) contenant le boîtier encastrable (10).

15. Tableau de distribution électrique encastrable selon la revendication 14, dans lequel la partie d'appui (24) s'étend à partir d'une extrémité carrée du boîtier de support (18) au moyen d'une jointure coudée (28) de telle façon qu'une deuxième branche (22b) de l'extrémité carrée soit disposée à une distance déterminée de la surface extérieure (26) du mur (14) contenant le boîtier encastrable (10).

16. Tableau de distribution électrique encastrable selon la revendication 14 ou 15, dans lequel ledit boîtier de support (18) est fixé au boîtier encastrable (10) à des extrémités opposées et dans lequel au moins une partie d'appui (24) est prévue pour chaque extrémité du boîtier de support (18) reliée au boîtier encastrable (10).

17. Tableau de distribution électrique encastrable selon la revendication 1, dans lequel ledit boîtier de support (18) est fixé au boîtier encastrable (10) à des extrémités opposées et dans lequel au moins une fente (30) est prévue pour chaque extrémité du boîtier de support (18) reliée au boîtier encastrable (10).

18. Tableau de distribution électrique encastrable selon la revendication 1 ou 2, dans lequel ledit élément de connexion (38) est une goupille filetée qui s'étend à partir du boîtier encastrable (10).

19. Tableau de distribution électrique encastrable selon la revendication 18, dans lequel lesdits moyens de fixation (36) comprennent une goupille filetée (44) montée sur le boîtier encastrable (10) pour recevoir ladite goupille filetée.

20. Tableau de distribution électrique encastrable selon la revendication 18 ou 19, dans lequel lesdits moyens de fixation (36) comprennent un écrou (46) qui est vissé sur la goupille filetée.
